# EUROPEAN PATENT APPLICATION

(11) **EP 4 083 415 A1**
(43) Date of publication of application: **02.11.2022**
(21) Application number: 21382379.2
(22) Date of filing: 29.04.2021
(51) Int. Cl.: F03D 1/06, F03D 80/30

(54) **METHOD FOR MANUFACTURING A WIND TURBINE BLADE WITH A LPS**

(71) Applicant: Siemens Gamesa Renewable Energy Innovation & Technology S.L., 31621 Sarriguren (Navarra) (ES)
(72) Inventor: March Nomen, Victor, 08194 Les Fonts (ES); Guerrero Buitrago, Olimpio, 31013 Artica (ES)
(74) Representative: SGRE-Association

(57) **Abstract**

A method for manufacturing a spar cap assembly is provided. The assembly comprises a carbon spar cap (4), at least one additional conductor (5a1, 5a2,... 5an), at least one electrical connector (6a1, 6a2,...6an), LPS down-conductor (7) and at least one equipotential bonding element (8a1, 8a2,...8an). Wherein at least one electrical connector (6a1, 6a2,...6an) is arranged into at least one additional conductor (5a1, 5a2,... 5an), which is arranged into the carbon spar cap (4). The LPS down-conductor (7) is placed parallel to the carbon spar cap (4). A resin infusion process is performed. The resin is removed from the electrical connector (6a1, 6a2,...6an) and the parallel sections of the LPS down-conductor (7). The electrical resistance is measured in different points along the carbon spar cap (4). An equipotential bonding element (8a1, 8a2,...8an) is arranged between the electrical connector (6a1, 6a2, ...6an) and the LPS down-conductor (7).

## Description

### FIELD OF THE INVENTION

The present invention relates to a method for manufacture a spar cap assembly that allows to measure the electrical connections in multiple different points along the spar cap. The spar cap assembly has a carbon spar cap, at least one additional conductor which is arranged into the carbon spar cap, at least one electrical connector which is arranged into the additional conductor and a LPS down-conductor placed parallel to the carbon spar cap. The carbon spar cap is joined to the LPS down-conductor by a resin infusion process. After the curing process, the resin is removed from the electrical connectors and the parallel sections of the LPS down-conductor. Each one of these connections is a point to measure the electrical resistance, hence allowing to check the electrical connections at different multiple points along the spar cap and consequently assuring the quality of the connections along the spar cap before its integration to the shell of the rotor blade. Once the spar cap is assembled, at least one equipotential element is arranged between the electrical connectors and the LPS down-conductor, to establish electrical connection between the carbon spar cap and the LPS down-conductor.

### BACKGROUND OF THE INVENTION

Nowadays in the field of renewable energies, the dimensions of wind turbines and wind turbine rotor blades continue to increase. The use of longer wind turbines and larger rotor blades results in the need to optimize blade design by using stiffer and lighter materials. Therefore, the materials are generally selected based on their stiffness-to-weight ratio or specific modulus and on the element being designed. Since the spar cap is a critical load-carry element, the use of carbon fiber reinforced polymer (CFRP) for this element may be preferred over glass fiber reinforced polymer (GFRP), due to CFRP has a very favorable stiffness-to-weight ratio.

Rotor blades are the most exposed part of the wind turbine with respect to lightning strikes. To avoid serious damage or destruction by lightning strikes, the rotor blade is typically provided with a lightning protection system (LPS). A spar cap made of carbon fiber has more conductivity and the inclusion of a lightning protection system is needed to prevent serious damage on the rotor blade by lightning strikes. A lightning protection system may comprise a lightning down-conductor which may be connected to the carbon spar cap, such lightning down-conductor may be extended along the longitudinal direction of the carbon spar cap completely or partially.

When the electrically conductive spar caps are electrically connected in parallel with the LPS down-conductor, it will cause a minor and most likely insignificant decrease in the resistance of the entire lightning protection system. However, since the electrical resistance is barely decreased, it is hard to determine if that difference is due to acceptable process and material variation or due to electrical connection/disconnection between the electrically conductive spar caps and the LPS down-conductor.

It is known that when a spar cap is manufactured together with a LPS down-conductor, in general is done in two different manners. One is to manufacture the spar cap and the LPS down conductor during the shell assembly as two independent elements and joined electrically and mechanically afterwards. Another way is to manufacture the spar cap together with the LPS down-conductor and having an electrical connection between both elements. Furthermore, the existing methods also have limitations in detecting if there is a bad connection between electrical conductors inside the blade.

EP2930010 discloses a wind turbine blade with a spar cap assembly, a lightning conductor and a potential equalizing element embedded in a common polymer matrix and is designed as a prefabricated assembly for its integration into the rotor blade to connect electrically the spar cap and the lightning conductor.

EP3569394 describes a method for manufacturing a spar cap, arranging carbon stacks side by side and bonded between each other. This method also comprises the steps of connecting a number of conductive strips to the spar cap and the one free end of the conductive strip is connected to the LPS down-conductor, to avoid any flash-over to the carbon spar cap.

A typical disadvantage of such known, is that once the spar cap is assembled by an infusion process, it is not possible to check the electrical connections between the electrical elements placed in the spar cap because the curing material covers them and does not allow to check the connections of the electrical elements arranged into the spar cap and consequently, to assure the quality of those connections. Poor electrical connections may show up when connections are not tight, dirt or other contaminants come between contact surfaces. A good quality of the connection is assured when there is a good contact between the surfaces of electrical elements, there is a good pressure between the elements and the materials of the elements have good electrical properties. The reliability and the state of these electrical connections have a decisive influence on the availability, safety and performance of the LPS.

According to the state of the art, it is not known any solution that allows to check the electrical resistance at the different connections between the spar cap before being integrated into the shell of the rotor blade. Thus, there exists an urgent need to provide a method to manufacture a spar cap with multiple different measuring points along the spar cap, in order to assure the quality of the electrical connections.

It is therefore a goal of the present invention to provide an inventive method to manufacture a spar cap with multiple measuring points that allows to check the electrical connections between the electrical elements arranged along the spar cap, before being integrated into the shell of the rotor blade. Once the spar cap is integrated into the shell of the rotor blade, it is difficult to detect a failure in the connections of the spar cap and to know which of all the connections is the deficient one and repair it. Therefore, the inventive method of the invention overcomes the above-mentioned disadvantages, such as to find the breakdown of an element in the specific point where has been occurred, saving time and resources to fix the failure, therefore assuring the quality of all the connections within the spar cap before of being integrated into the shell of the rotor blade.

Further solutions suggest the inclusion of an insulating material, which may be positioned between the electrical connector and the LPS down-conductor during the manufacturing of the spar cap assembly, to create a gap between the carbon spar cap and the LPS down-conductor.

### SUMMARY OF THE INVENTION

The object of the invention is achieved by the independent claims. The dependent claims describe advantageous developments and modifications of the invention.

In accordance with the invention there is provided a method for manufacture a spar cap assembly that allows to measure the electrical connection in multiple different points along the spar cap. The spar cap assembly is comprised by a carbon spar cap, at least one additional conductor, at least one electrical connector and a LPS down-conductor. The first step may be arranged at least one electrical connector into the at least one additional conductor and afterwards the additional conductor, within the electrical connector inside, may be arranged into the carbon spar cap. Once these elements of the spar cap assembly are joined together, the LPS down-conductor may be placed parallel to the carbon spar cap. Then, a resin infusion process may be performed to join the carbon spar cap with the LPS down-conductor. After the curing process, the resin may be removed from the electrical connectors and the parallel sections of the LPS down-conductor, these sections may have the same length of the electrical connectors. Hence, measures of the electrical resistance may be taken between different points along the carbon spar cap to assure the quality of the connections between them. Furthermore, at least one equipotential bonding element may be arranged between the electrical connector and the LPS down-conductor.

The advantage of this method following the steps in the order established in claim 1, is that the product obtained by this process is a spar cap that may have multiple different points along it to perform the measurement of the electrical connections in order to assure the quality of all the connections of the spar cap and hence the quality of the manufacturing process. By measuring multiple points, the individual values may be established in each connection and replacement of damage elements may be done. Finally, obtaining a reliable and good quality spar cap before being integrated into the rotor blade shell.

The method according to the invention it is described in the claim 1 and it is essential that must be followed in the exact same order.

The carbon spar cap may have at least one carbon stack. Preferably, the carbon stacks are oriented in parallel direction or at least substantially parallel to the rotor blade longitudinal axis. Carbon fiber is a conductor material and transmits current, however, the electrical conductivity of the carbon fiber depends strongly on the orientation of carbon fibers, the longitudinal conductivity that is parallel to the fiber direction is the highest, whilst the transverse conductivity goes in the perpendicular direction to the fibers. Furthermore, the additional conductor is arranged into the carbon spar cap. Preferably, the additional conductor may be made of carbon fiber as well.

The electrical connector is arranged into the additional conductor. Preferably, the electrical connector may be composed by two or more conductive elements and may have different shape in order to be adapted to the electrical connections with the additional conductor and the equipotential bonding element. After the curing process, the resin may be removed from each electrical connector and may be a measuring point along the carbon spar cap. The electrical connector may have different shapes such as mesh, sheet, foil, circular or rectangular. Furthermore, the electrical connector may be made of copper, brass, or aluminum.

The LPS down-conductor may be placed in parallel to the carbon spar cap and a resin infusion process may be performed to join them. It is important to outstand that after the resin infusion process has been done, the carbon spar cap and the LPS down-conductor are not in contact and there is no conductivity between them. Consequently, after resin may be removed from the electrical connectors and the parallel sections of the LPS down-conductor, and also after measures of the electrical connections along the spar cap may have done to assure the quality, an equipotential bonding element may be arranged between the electrical connector and the parallel sections of the LPS down-conductor, to establish an electrical connection between these elements.

The main purpose of the equipotential bonding element is to establish an electrical connection between the carbon spar cap and the LPS down-conductor. The equipotential bonding element may be connected to the electrical connector and the LPS down-conductor by means of an additional resin infusion process or by means a of bolted connection. As an alternative, the equipotential bonding element may be connected to the electrical connector and the LPS down-conductor by mechanical fastening means such as screws or studs. The equipotential bonding element may be made of stainless steel, steel, copper, brass, aluminium or carbon fiber. The equipotential bonding element may provide low resistance, with the purpose to equalize or balance the potential difference between the carbon spar cap and the LPS down-conductor, thus preventing undesirable discharge that could provoke any damage in the spar cap.

In another embodiment of the method of the invention, at least one additional electrical connector may be arranged into the LPS down-conductor. Once the carbon spar cap is joined to the LPS down-conductor by the infusion process, the resin may be removed from the electrical connector arranged in the additional conductor as well as the resin in the additional electrical connector arranged in LPS down-conductor. An equipotential bonding element may be arranged between the electrical connector and the additional electrical connector arranged into the LPS down-conductor. Preferably, the additional electrical connector may have different shapes such as mesh, sheet, foil, circular or rectangular. The additional electrical connector may be made of copper, brass, or aluminum. The additional electrical connector may be composed at least by two or more conductive elements. The advantage of placing an additional electrical connector into the LPS down-conductor is that assures a better fixation of the equipotential bonding element and avoids the damage of the LPS down-conductor with the fixation means. The equipotential bonding element may be arranged into the additional electrical connector by mechanical fastening means such as screw, studs or by means of a bolted connection. Therefore, the additional electrical connector is a better connecting element between the equipotential bonding element and the LPS down-conductor, as the screws or studs may damage the LPS down-conductor.

In a preferred embodiment of the method of the invention, before performing the infusion process, an adhesive strip, preferably plastic, may be placed on the at least one electrical connector in its entire length and a second adhesive strip may be placed in the LPS down-conductor, having the second adhesive strip the same length of the electrical connector. In case that an electrical connector is arranged in the LPS down-conductor, the adhesive strip may be placed over the electrical connector. The aim of the adhesive strip is to cover the electrical connector and the section of the LPS down-conductor parallel to the electrical connector, avoiding that both elements may be impregnated with resin after the curing process, therefore maintaining their conductivity. After curing process, all the adhesive strips may be removed. Afterwards, an equipotential bonding element may be arranged between the electrical connector and the LPS down-conductor to connect both elements.

The resin may be removed by other means such as sanding, but this process could scratch and damage the electrical connectors and the LPS down-conductor.

### BRIEF DESCRIPTION OF THE DRAWINGS

Embodiments of the invention are now described, by way of example only, with reference to the accompanying drawings, of which:
- Fig 1: depicts a schematic side view of a rotor blade with the spar cap assembly along the longitudinal direction and the respective connection of its elements according to an example;
- Fig 2: depicts a top view of the connections of the elements of the spar cap assembly according to an example;
- Fig 3: depicts a top view of the connections of the elements of the spar cap assembly, the equipotential bonding element installed between the electrical connector and the LPS down-conductor according to an example;
- Fig 4: depicts a top view of the connections of the elements along the carbon spar cap according to an example;
- Fig 5: depicts a top view of the connections of the elements along the carbon spar cap, the equipotential bonding elements arranged between the electrical connectors and the LPS down-conductor according to an example;
- Fig 6: depicts a top view of another embodiment of the invention, the connections of the spar cap assembly with the additional electrical connector arranged in the LPS down-conductor according to an example;
- Fig 7: depicts a top view of the connections of another embodiment of the invention, the equipotential bonding element installed between the electrical connector and the additional electrical connector according to an example;
- Fig 8: depicts a top view of another embodiment of the invention, it shows the connections along the carbon spar cap with the additional connectors arranged in the LPS down-conductor according to an example;
- Fig 9: depicts a top view of another embodiment of the invention, it shows the connections of the elements along the carbon spar cap, where the equipotential bonding elements are arranged between the electrical connectors and the additional electrical connectors according to an example;
- Fig 10: depicts a flow diagram of the method for manufacturing a spar cap assembly for a wind turbine rotor blade with multiple measuring points according to an example.

The illustration in the drawings is in schematic form. It is noted that in different figures, similar or identical elements may be provided with the same reference signs.

### DESCRIPTION OF THE DRAWINGS

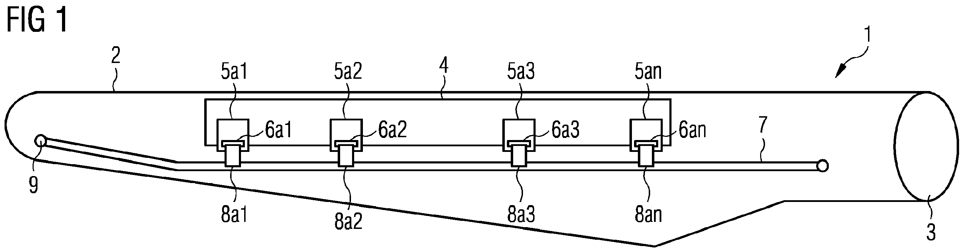

Fig 1 shows a spar cap assembly within the rotor blade (1). The spar cap assembly comprises a carbon spar cap (4), at least one additional conductor (5a), at least one electrical connector (6a), LPS down-conductor (7) and at least one equipotential bonding element (8a). The carbon spar cap (4) runs along parallel to the rotor blade (1) in the longitudinal direction. At least one electrical connector (6a) is arranged into an additional conductor (5a), which is arranged in the carbon spar cap (4). The LPS down-conductor (7) runs along parallel to the carbon spar cap (4) leaving a gap between them. The LPS down-conductor (7) goes from the receptor (9) located at the tip (2) of the rotor blade (1) towards the receptor (9) located near to the root (3) of the rotor blade (1). An equipotential bonding element (8a) is arranged between each electrical connector (6a) and the LPS down-conductor (7).

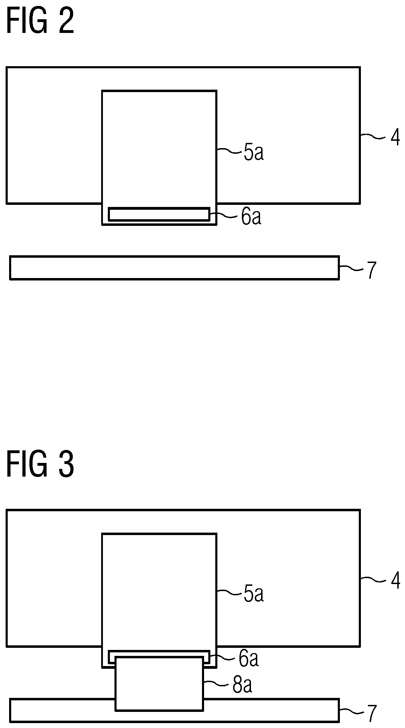

Fig 2 shows the connection of the elements of the spar cap assembly after the curing process from a top view. The electrical connector (6a) is near to the bottom edge of the additional conductor (5a) and the length of the electrical connector (6a) may be shorter of the length of the additional conductor (5a), so the entire body of the electrical connector (6a) remains inside the additional conductor (5a). In the same way, the additional conductor (5a) is arranged in the carbon spar cap (4) such that a small portion over protrudes outside of the carbon spar cap (4). The portion of the additional conductor (5a) that is outside of the carbon spar cap (4) may be the same portion where the electrical connector (6a) might be placed. The LPS down-conductor (7) is placed in parallel to the carbon spar cap (4) leaving a gap between them.

Fig 3 shows the disposition of the elements of the spar cap assembly after the resin of the curing process has been removed. The disposition of the elements corresponds to the one of Fig 2, except that additionally, an equipotential bonding element (8a) is arranged between the electrical connector (6a) and the LPS down-conductor (7). The equipotential bonding element (8a) is connected to the electrical connector (6a) and the and the LPS down-conductor (7) by means of an additional resin infusion process, by means of a bolted connection or by mechanical fastening means such as screws or studs.

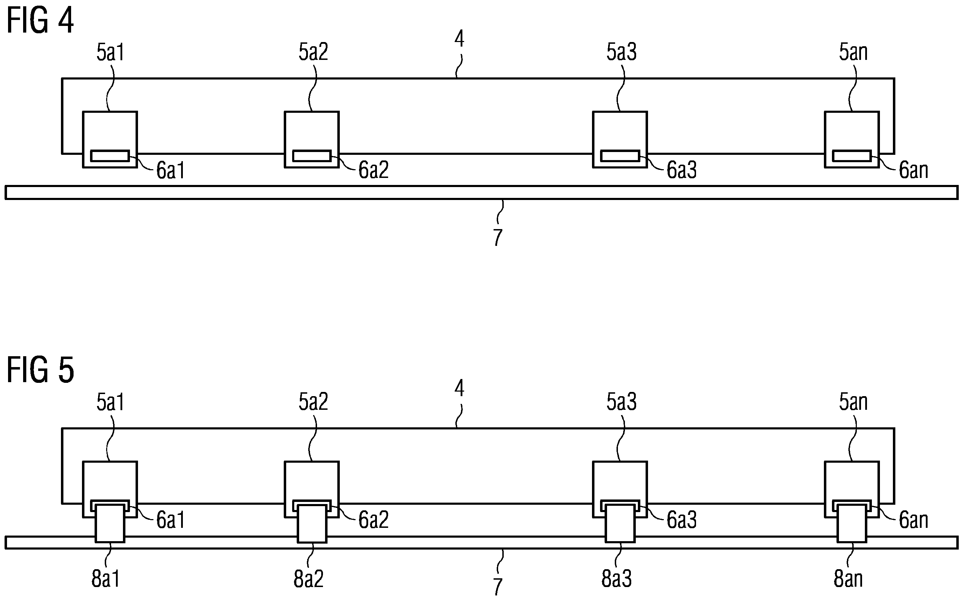

Fig 4 shows a top view of the connections of the elements along the carbon spar cap (4); at least one electrical connector (6a1, 6a2,... 6an) is arranged into at least one additional conductor (5a1, 5a2,... 5an), which are arranged into the carbon spar cap (4), leaving a gap between them. The LPS down-conductor (7) is placed in parallel to the carbon spar cap (4), leaving a gap between them.

Fig 5 shows a top view of the connections of the elements along the carbon spar cap (4). After removing the resin from the electrical connectors (6a1, 6a2,... 6an) and from the parallel sections of the LPS down-conductor (7), measures of the electrical resistance in the different points may be taken, at least one equipotential bonding element (8a1, 8a2,... 8an) is connected between at least one electrical connector (6a1, 6a2,... 6an) and the LPS down-conductor (7). The equipotential bonding elements (8a1, 8a2,... 8an) may be arranged by means of an additional resin infusion process, by means of a bolted connection or by mechanical fastening means such as screws or studs.

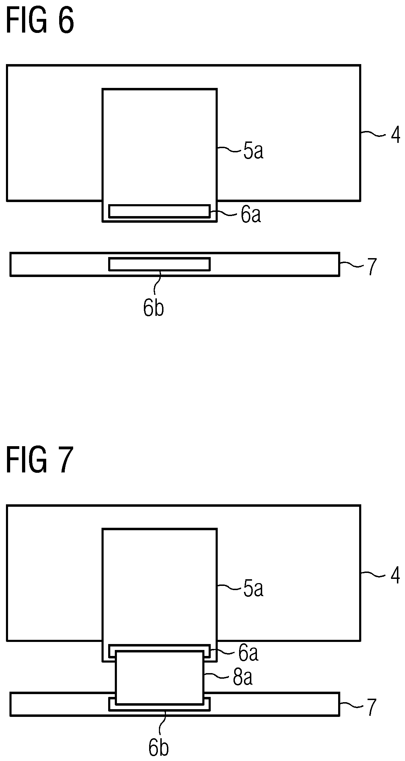

Fig 6 shows a top view of another embodiment of the invention. The disposition of the elements in the carbon spar cap (4) is the same as described in Fig 2, except in that an additional electrical connector (6b) may be arranged in the LPS down-conductor (7).

Fig 7 shows a top view of another embodiment of the invention. The disposition of the elements in the carbon spar cap (4) is the same as described in Fig 6, except in that an equipotential bonding element (8a) is arranged between the electrical connector (6a) and the additional electrical connector (6b). The equipotential bonding element (8a) may be arranged by means of an additional resin infusion process, by means of a bolted connection or by mechanical fastening means such as screws or studs.

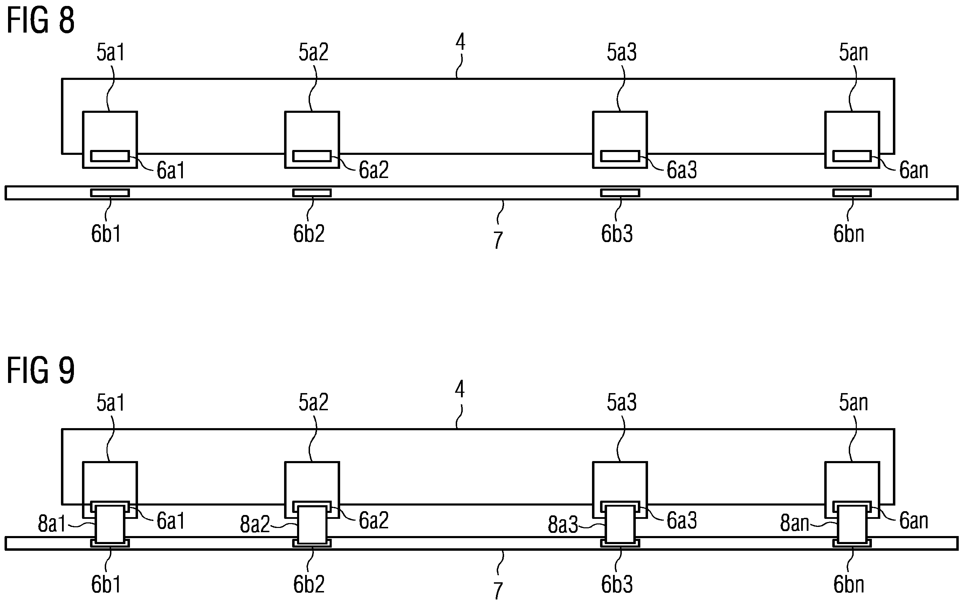

Fig 8 shows a top view of another embodiment of the invention. It shows the connections of the elements along the carbon spar cap (4). At least one electrical connector (6a1, 6a2,... 6an) is arranged in at least one additional conductor (5a1, 5a2,... 5an), which is placed in the carbon spar cap (4), leaving a gap between them. The LPS down-conductor (7) is placed in parallel to the carbon spar cap (4), leaving a gap between them. At least one additional electrical connector (6b1, 6b2,...6bn) is arranged into the LPS down-conductor (7) in parallel to the electrical connectors (6a1, 6a2,...6an).

Fig 9 shows a top view of another embodiment of the invention. The disposition of the elements in the carbon spar cap (4) is the same as described in Fig 8, except in that at least one equipotential bonding element (8a1, 8a2,...8an) is arranged between the electrical connectors (6a1, 6a2,... 6an) and the additional electrical connectors (6b1, 6b2,...6bn). Once the resin has been removed from the electrical connectors (6a1, 6a2,... 6an) and the additional electrical connectors (6b1, 6b2,...6bn) and the measures of the electrical resistance in the different points may be taken and the quality of the electrical connections has been assured, at least one equipotential bonding element (8a1, 8a2,...8an) may be arranged between at least one electrical connector (6a1, 6a2,... 6an) and at least one additional electrical connector (6b1, 6b2,...6bn).

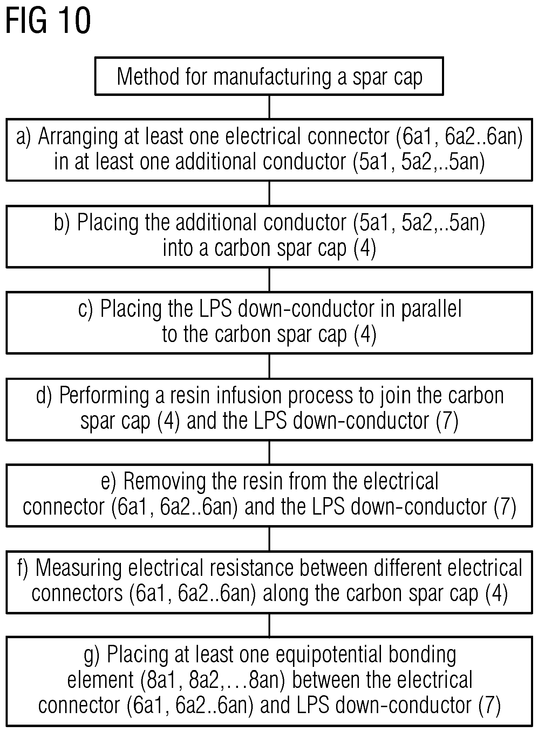

Fig 10 shows a flow diagram of the method for manufacturing a spar cap assembly for a wind turbine rotor blade (1). The method comprises the steps of placing at least one electrical connector (6a1, 6a2,... 6an)in at least one additional conductor (5a1, 5a2,... 5an), such additional conductor (5a1, 5a2,... 5an) may be placed in the carbon spar cap (4). Placing the LPS down-conductor (7) in parallel to the carbon spar cap (4) within the shell and leaving a gap between them. A resin infusion process may be performed in order to join the carbon spar cap (4) and the LPS down-conductor (7). Removing the resin from the electrical connectors (6a1, 6a2,... 6an) and the parallel sections of the LPS down-conductor (7). Measuring the electrical resistance at multiple different points along the carbon spar cap (4), to assure the quality of the connection between the carbon spar cap (4) and the LPS down-conductor (7). Once the curing process is done, placing at least one equipotential bonding element (8a1, 8a2,...8an) between each electrical connector (6a1, 6a2,...6an) and the LPS down-conductor (7).

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Method for manufacturing a spar cap assembly for a wind turbine rotor blade (1) having the spar cap assembly a carbon spar cap (4), a LPS down-conductor (7), at least one additional conductor (5a1, 5a2,... 5an), and at least one electrical connector (6a1, 6a2,... 6an), the method comprising the following steps:
a) Arranging at least one electrical connector (6a1, 6a2,...6an) into at least one additional conductor ((5a1, 5a2,... 5an) ;
b) Placing the additional conductor (5a1, 5a2,... 5an) into the carbon spar cap (4);
c) Placing the LPS down-conductor (7) in parallel to the carbon spar cap (4) and leaving a gap between them;
d) Performing a resin infusion process to join the carbon spar cap (4) and the LPS down conductor (7);
e) Removing the resin from the electrical connectors (6a1, 6a2,...6an) and the sections of the LPS down-conductor (7) that are parallel to the electrical connectors (6a1, 6a2,...6an);
f) Measuring electrical resistance between different electrical connectors (6a1, 6a2,...6an) along the carbon spar cap (4) to assure the quality between the connections, and
g) once the spar cap is assembled, arranging at least one equipotential bonding element (8a1, 8a2,...8an) between the electrical connectors (6a1, 6a2,...6an) and the LPS down-conductor (7).

2. Method for manufacturing a spar cap assembly for a wind turbine rotor blade (1) according to claim 1, having the spar cap assembly at least one additional electrical connector (6b1, 6b2,...6bn), wherein at least one additional electrical connector (6b1, 6b2,...6bn) is arranged into the LPS down-conductor (7) in parallel to the electrical connectors (6a1, 6a2,...6an) .

3. Method for manufacturing a spar cap assembly for a wind turbine rotor blade (1) according to claim 1 or 2, wherein before step d) an adhesive strip, preferably plastic, is placed at the entire length of the electrical connectors (6a1, 6a2,...6an) and a second adhesive strip is placed on the parallel sections of the LPS down-conductor (7), having both adhesive strips the same length; and
wherein the adhesive strips are removed in the step e) to remove the resin from the electrical connectors (6a1, 6a2,...6an) and the parallel sections of the LPS down-conductor (7).

4. Method for manufacturing a spar cap assembly for a wind turbine rotor blade (1) according to claim 1 or 2, wherein in the step e) may be carried out by performing a sanding process to remove the resin in the electrical connectors (6a1, 6a2,...6an) and the parallel sections of the LPS down-conductor (7) .

5. Method for manufacturing a spar cap assembly for a wind turbine rotor blade (1) according to claims 1 or 2, wherein the step g) is done by an additional resin infusion process.

6. Method for manufacturing a spar cap assembly for a wind turbine rotor blade (1) according to claim 1 or 2, wherein the step g) is done by means of a bolted connection.

7. Method for manufacturing a spar cap assembly for a wind turbine rotor blade (1) according to claim 1 or 2, wherein the step g) is done by mechanical fastening means such as screws or studs.

8. Method for manufacturing a spar cap assembly for a wind turbine rotor blade (1) according to claim 1 or 2, wherein the LPS down-conductor (7) of the spar cap assembly may run along the carbon spar cap (4) entirely or partially in parallel direction.

9. Method for manufacturing a spar cap assembly for a wind turbine rotor blade (1) according to claim 1 or 2, wherein the additional conductor (5a1, 5a2,... 5an) of the spar cap assembly may be composed of carbon fiber.

10. Method for manufacturing a spar cap assembly for a wind turbine rotor blade (1) according to claim 1 or 2, wherein the equipotential bonding element (8a1, 8a2,...8an) may be made of carbon fiber, copper, stainless steel, steel, brass or aluminium.

11. Method for manufacturing a spar cap assembly for a wind turbine rotor blade (1) according to the preceding claims, wherein the electrical connectors (6a1, 6a2,...6an) and the additional electrical connectors (6b1, 6b2,...6bn) of the spar cap assembly may have different shape such as mesh, sheet, foil, circular or rectangular.

12. Method for manufacturing a spar cap assembly for a wind turbine rotor blade (1) according to the preceding claims, wherein the electrical connectors (6a1, 6a2,...6an) and the additional electrical connectors (6b1, 6b2,...6bn) may be made of carbon fiber, copper, brass, aluminium or stain-less steel.

13. Method for manufacturing a spar cap assembly for a wind turbine rotor blade (1) according to the preceding claims, wherein the electrical connectors (6a1, 6a2,...6an) and the additional electrical connectors (6b1, 6b2,...6bn) may be composed by at least two or more conductive elements.

14. Method for manufacturing a spar cap assembly for a wind turbine rotor blade (1) according to the preceding claims, wherein the carbon spar cap (4) of the spar cap assembly, comprises at least one parallel carbon stack.

15. A spar cap assembly for a wind turbine rotor blade (1) according to any of the previous claims, comprising
- a carbon spar cap (4) having at least one carbon stack;
- at least one additional conductor (5a1, 5a2,... 5an) arranged into the carbon spar cap (4);
- at least one electrical connector (6a1, 6a2,...6an) arranged into the additional conductor (5a1, 5a2,... 5an) ;
- a LPS down-conductor (7), wherein LPS down - conductor (7) is being infused with resin to the carbon spar cap (4) along the spar cap; and
wherein after step f, the equipotential bonding element (8a1, 8a2,...8an) is arranged between the electrical connector (6a1, 6a2,...6an) and the LPS down-conductor (7).
